# EUROPEAN PATENT APPLICATION

(11) **EP 2 555 091 A2**
(43) Date of publication of application: **06.02.2013**
(21) Application number: 11762954.3
(22) Date of filing: 23.03.2011
(51) Int. Cl.: G06F 3/041

(54) **TOUCH-SENSING PANEL AND TOUCH-SENSING APPARATUS**

(30) Priority: 09.11.2010 KR 20100110883; 16.04.2010 KR 20100035338; 30.03.2010 KR 20100028237
(71) Applicant: Melfas Inc., Seoul 153-801 (KR)
(72) Inventor: MIN, Dong Jin, Goyang-si Gyeonggi-do 410-380 (KR); OH, Do Hwan, Seoul 135-794 (KR)
(74) Representative: Zardi, Marco
(86) International application number: PCT/KR2011/001981
(87) International publication number: WO 2011/122782

(57) **Abstract**

The present invention relates to a touch-sensing panel and to a touch-sensing apparatus. The touch-sensing panel according to the present invention includes a substrate and one or more sensing regions prepared on the substrate, wherein the sensing region includes one or more first electrodes extending in a first axis direction, and one or more second electrodes extending in a second axis direction intersecting the first axis, and wherein at least some of the second electrodes are included in different sensing regions and electrically connected to another second electrode disposed at the same location on the first axis. According to the present invention, by disposing a second electrode in a space that is prepared inside a first electrode receiving a driving signal or disposing a second electrode such that the first electrode surrounds the second electrode according to the electrode type, a touch-sensing panel and touch-sensing apparatus which can accurately determine one or more touch inputs can be provided in a single-layer structure.

## Description

### Technical Field

The present invention relates to a touch-sensing panel and a touch-sensing apparatus, and more particularly, to a touch-sensing panel and a touch-sensing apparatus that may determine one or more touch inputs that may be applied simultaneously or sequentially, and that may be provided in a single-layer structure.

### Background Art

While mobile phones equipped with touch screens are widespread, and various types of smartphones become popular, research on touch-sensing technologies is actively being conducted. Touch screens, namely typical touch-sensing apparatuses, may be classified into resistive touch screens, capacitance touch screens, ultrasonic touch screens, infrared touch screens, and the like, according to operation schemes of touch screens. Among such touch screens, capacitance touch screens have excellent durability and lifespan, and may support a multi-touch function, and accordingly an application field of capacitance touch screens is being expanded.

Capacitance touch screens may be divided by a scheme of determining a touch input using self-capacitance generated between a touch object and a sensing electrode, instead of applying a separate driving signal, and a scheme of applying a predetermined driving signal and of determining a touch input using mutual-capacitance generated between a plurality of sensing electrodes by a touch object. In the scheme using self-capacitance, a circuit configuration is simple, and it is easy to implement capacitance touch screens, however, it is difficult to determine multi-touch.

Conversely, the scheme using mutual-capacitance is advantageous in determination of multi-touch, compared to the scheme using self-capacitance, however, may enable a capacitance touch screen to be thickened because the capacitance touch screen needs to have a two-layer structure. Additionally, manufacturing costs of a mutual capacitance touch screen having a two-layer structure may increase, compared to a touch screen having a single-layer structure, due to an increase in processing stages. However, in a conventional touch screen having a single-layer structure, it is impossible to determine multi-touch.

### Disclosure of Invention

### Technical Goals

An aspect of the present invention is to provide a touch-sensing panel and a touch-sensing apparatus that may accurately determine a plurality of touch inputs and that may be provided in a single-layer structure.

### Technical solutions

According to an aspect of the present invention, there is provided a touch-sensing panel, including: a substrate; and one or more sensing regions prepared on the substrate, wherein each of the one or more sensing region includes one or more first electrodes extending in a first axis direction, and one or more second electrodes extending in a second axis direction intersecting a first axis, and wherein at least one of the second electrodes are electrically connected to another second electrode arrayed at the same position on the first axis and included in different sensing region.

According to an aspect of the present invention, there is provided a touch-sensing apparatus, including: a plurality of first electrodes to which a driving signal is applied; a plurality of second electrodes formed on the same layer as the first electrodes; and a controller chip to determine the one or more touch inputs, wherein each of the plurality of second electrodes is surrounded by a neighboring first electrode, and wherein the controller chip determines the one or more touch inputs, based on a change in a mutual capacitance generated between the second electrode and the first electrode to which the driving signal is applied.

### Effect of Invention

As described above, in a touch-sensing apparatus according to embodiments of the present invention, a plurality of electrodes may be disposed on one surface of a substrate, and a controller chip may detect a change in mutual capacitance occurring by a touch object from an electrode surrounded by an electrode to which a driving signal is applied. Accordingly, in a touch-sensing apparatus that is relatively thin, compared to a two-layer structure, it is possible to increase an accuracy of determination of a touch input including a multi touch, by reducing an influence by noise, and by increasing a signal sensitivity.

### Brief Description of Drawings

FIG. 1 is a diagram illustrating a touch-sensing panel according to a first embodiment of the present invention.
FIGS. 2 and 3 are diagrams illustrating an enlarged region A of the touch-sensing panel of FIG. 1.
FIG. 4 is a diagram illustrating a touch-sensing panel according to a second embodiment of the present invention.
FIG. 5 is a diagram illustrating an electrode pattern of a touch-sensing panel according to a third embodiment of the present invention.
FIGS. 6 through 8 are diagrams provided to explain an operation of a touch-sensing apparatus according to the present invention.
FIG. 9 is a diagram illustrating a touch-sensing apparatus according to an embodiment of the present invention.
FIG. 10 is a diagram illustrating a touch-sensing panel according to an embodiment of the present invention.
FIGS. 11 is diagrams provided to explain an operation of a touch-sensing panel according to the present invention.

### Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

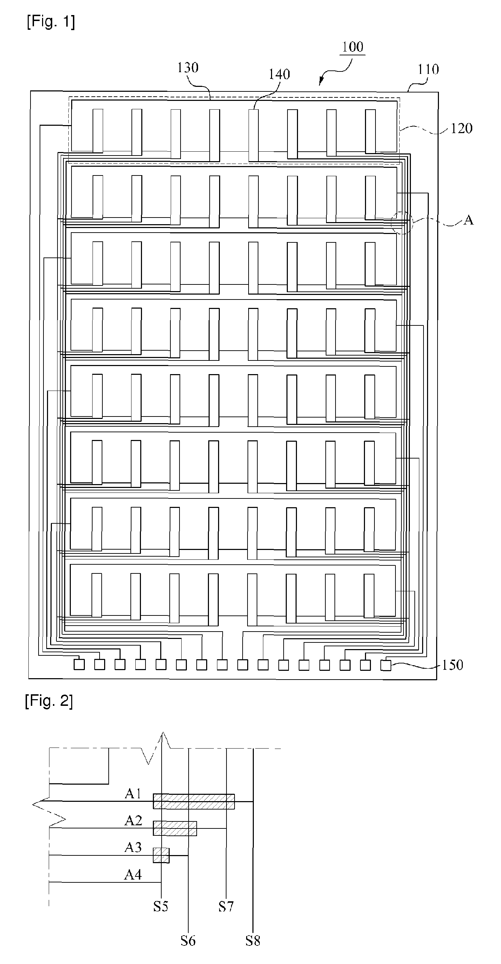

FIG. 1 is a diagram illustrating a touch-sensing panel according to a first embodiment of the present invention. Referring to FIG. 1, a touch-sensing panel 100 according to the present embodiment may include a substrate 110, one or more sensing regions 120 formed on the substrate 110, and a wiring pattern 150 that is disposed in left and right bezel regions of the substrate 110 and that is electrically connected to the sensing region 120. The wiring pattern 150 may extend to one end of the substrate 110, and may include a bonding pad to enable the wiring pattern 150 to be electrically connected to a circuit board (not shown) in which a controller chip (not shown) is mounted.

The substrate 110 may refer to a support plate, in which the sensing regions 120, the wiring pattern 150, the bonding pad, and the like are disposed, and to which the circuit board in which the controller chip is mounted is attached by an ACF process and the like, and may be prepared using materials, such as poly(ethylene terephthalate) (PET), poly(methyl methacrylate) (PMMA), Polycarbonate (PC), polyimide (PI), a tempered glass, a sapphire glass, and the like. In particular, when the touch-sensing panel 100 is a touch screen attached to a display apparatus, materials with an excellent optical transmittance, such as the above materials, may desirably be used.

The sensing region 120 may include one or more first electrodes 130 extending in a first axis direction, and one or more second electrodes 140 extending in a second axis direction that intersects the first axis direction. In FIG. 1, the first axis direction and the second axis direction may correspond to a horizontal direction and a vertical direction, respectively. A single sensing region 120 may include a single first electrode 130, and eight second electrodes 140, and the touch-sensing panel 100 may include a total of eight sensing regions 120. An inclusion relationship between the sensing regions 120, the first electrodes 130, and the second electrodes 140 may not be determined as shown in FIG. 1, and a sensing region may be implemented in various shapes.

For example, a single second electrode 140 and a part of a first electrode 130 neighboring the second electrode 140 may be determined to be a single sensing region 120. In this instance, the touch-sensing panel 100 may include a total of 64 sensing regions 120, unlike the above-described case. In other words, hereinafter, a term [sensing region] used throughout the present specification may need to be understood to mean a constant unit region enabling determination of a touch input of a user, instead of a region defined by a sensing channel connected to a controller chip, or by a sensing electrode that is physically and electrically separated.

A second electrode 140 may be disposed to fill a space prepared in a first electrode 130 forming a sensing region 120 including the second electrode 140. Referring to FIG. 1, a single first electrode 130 may include a total of eight spaces provided in a direction (a second axis, the vertical direction) that intersects a direction that the first electrode 130 extends (a first axis, the horizontal direction), and a single second electrode 140 may be disposed in a single space. For example, there is no need to limit a direction in which a space prepared in the first electrode 130 extends, as shown in FIG. 1. A plurality of second electrodes 140 may be disposed in a single space, or a plurality of second electrodes 140 connected to the same sensing channel of a controller chip may be disposed to fill a single space.

The first electrode 130 and the second electrode 140 included in the sensing regions 120 may be electrically connected to the controller chip through the wiring pattern 150 disposed in the left and right bezel regions of the substrate 110. In this instance, at least a part of a plurality of second electrodes 140 disposed in the same location on the first axis may be connected to a single wiring pattern 150, and accordingly it is possible to reduce a number of wiring patterns 150 and a width of a bezel region. In a touch screen attached to a display apparatus, a wiring pattern disposed in an effective display region of the touch-sensing panel 100 may desirably be formed of transparent electroconductive materials, such as indium tin oxide (ITO), zinc oxide (ZnO), indium zinc oxide (IZO), a Carbon Nanotube (CNT), and the like, so that a display screen may be displayed to a user through the touch screen.

When the first electrode 130 and the second electrode 140 are disposed in the same surface of the substrate 110, an arrangement of the wiring patterns 150 connected to the first electrode 130 and the second electrode 140 may be a problem. Since the one or more second electrodes 140 disposed in the same location on the first axis are connected to a single sensing channel of the controller chip, a problem may occur in the bezel region of the substrate 110 due to overlapping of the wiring patterns 150, which will be further described with reference to FIG. 2.

FIG. 2 is a diagram illustrating an enlarged region A of the touch-sensing panel of FIG. 1. Referring to FIG. 2, wiring patterns A1, A2, A3 and A4 connected respectively to the second electrodes 140 may be connected to wiring patterns S8, S7, S6 and S5 of a bezel region, respectively. As described above, the wiring patterns A1 to A4 disposed in the effective display region of the touch-sensing panel 100 may desirably be formed of transparent electroconductive materials, such as ITO, IZO, ZnO, CNT, and the like, similarly to the first electrode 130 and the second electrode 140.

The wiring pattern A1 may be connected to the wiring pattern S8 and accordingly, may need to be insulated from the wiring patterns S5 to S7. As shown in FIG. 2, a predetermined insulating material may be applied to a partial region of the wiring pattern A1, and the wiring patterns S5 to S7 may be insulated from the wiring pattern A1. Similarly, a predetermined insulating material may be applied to a partial region of the wiring patterns A2 to A4, and accordingly the controller chip may sense a sensing signal generated in the first electrode 130 and the second electrode 140, without overlapping.

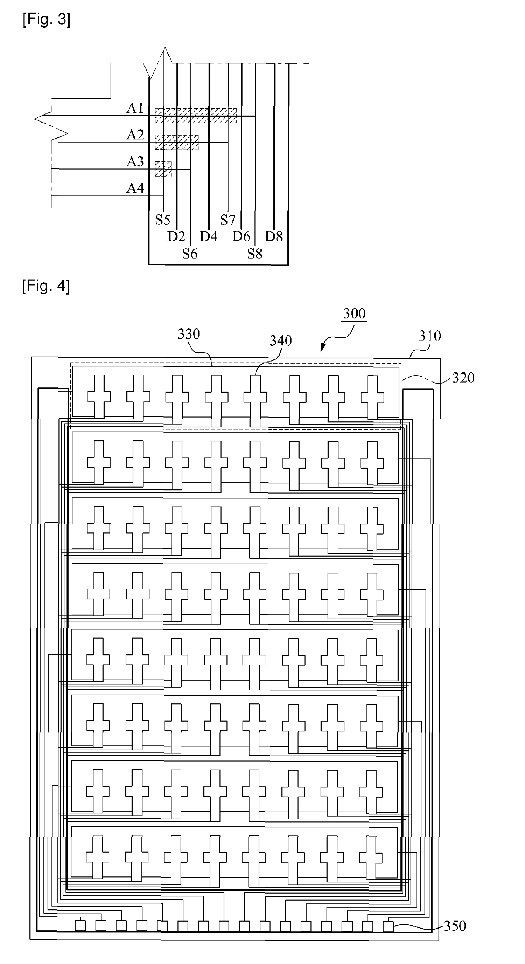

In FIGS. 2 and 3, the wiring patterns A1 to A4 may be assumed to be disposed below the wiring patterns S5 to S8. Conversely, the wiring patterns A1 to A4 may be disposed above the wiring patterns S5 to S8.

FIG. 3 is a diagram illustrating an enlarged right bezel region of the touch-sensing panel of FIG. 1. Referring to FIG. 3, similarly to FIG. 2, the wiring patterns A1 to A4 may be connected to the wiring patterns S8 to S5, respectively. To the sensing channel of the controller chip, a wiring pattern connected to the first electrode 130, as well as the wiring patterns S5 to S8 connected to the second electrodes 140, may need to be connected. In the present embodiment, it is assumed that eight first electrodes 130 are included, and that wiring patterns connected to four first electrodes 130 are respectively disposed in the left and right bezel regions of the substrate 110. Accordingly, as shown in FIG. 3, wiring patterns D2, D4, D6, and D8 connected respectively to the first electrodes 130 may be disposed in the right bezel region.

The wiring patterns D2, D4, D6, and D8 may be relatively disposed in an edge of the substrate 110, compared to the wiring patterns S5 to S8. In this instance, a process of using a separate insulating layer to insulate the wiring patterns D2, D4, D6, and D8 from the wiring patterns S5 to S8 may also need to be added. Accordingly, the wiring patterns S5 to S8 and the wiring patterns A1 to A4 connected to the second electrodes 140 may be formed, an insulating layer covering the wiring patterns A1 to A4 and S5 to S8 may be disposed over the bezel region, and the wiring patterns D2, D4, D6, and D8 connected respectively to the first electrodes 130 may be formed on the insulating layer. In other words, the wiring patterns may be formed in a multi-layer structure in the bezel region of the substrate 110.

FIG. 4 is a diagram illustrating a touch-sensing panel according to a second embodiment of the present invention. Similarly to the touch-sensing panel 100 of FIG. 1, a touch-sensing panel 300 according to the present embodiment may include a substrate 310, one or more sensing regions 320, a wiring pattern 350, and the like. A single sensing region 320 may include a first electrode 330 and second electrodes 340, and each of the second electrodes 340 may be surrounded by a neighboring first electrode 330.

Hereinafter, an expression [a second electrode surrounded by a neighboring first electrode] used throughout the present specification may need to be understood to mean the second electrode 340 enclosed by the first electrode 330 in the same plane. Referring to FIG. 4, each of the second electrodes 340 may be formed in a shape of a cross, and edges other than an edge connected to the wiring pattern 350 may be adjacent to the first electrode 330. Accordingly, a shape of the first electrode 330 may vary based on various shapes of the second electrode 340.

In the embodiment of FIG. 4, a wiring pattern of a bezel region may be formed in a separate circuit board 360. In other words, an insulating material may be used to connect the wiring patterns A1 to A4 disposed in the effective display region to only one of the wiring patterns S5 to S8, as shown in FIGS. 2 and 3, however, the separate circuit board 360 may be used. Circuit patterns corresponding to the wiring patterns S5 to S8 of FIGS. 2 and 3 may be formed in advance on the circuit board 360, and may be connected using a via hole, the wiring patterns A1 to A4 connected respectively to the second electrodes 340, and the like, and thus it is possible to simplify a manufacturing process and a structure.

The circuit patterns corresponding to the wiring patterns S5 to S8 of FIGS. 2 and 3 may be formed in one side of the circuit board 360, and may be attached onto the substrate 310 so that the side may face an opposite side of the substrate 310. Subsequently, a controller chip (not shown) may be electrically connected to the second electrode 340, by connecting the wiring patterns A1 to A4, and the like to the circuit patterns through a via hole prepared along the circuit patterns.

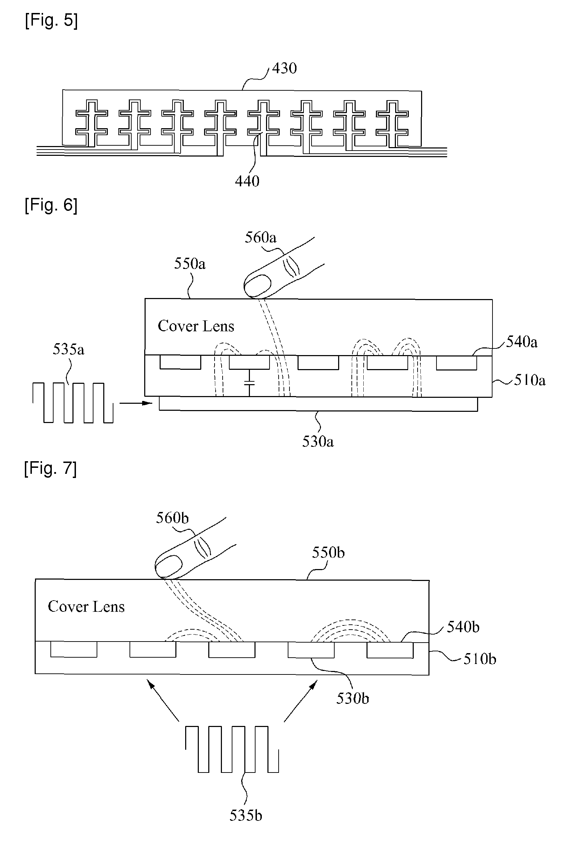

FIG. 5 is a diagram illustrating an electrode pattern of a touch-sensing panel according to a third embodiment of the present invention. Referring to FIG. 5, in a second electrode 440 according to the present embodiment, two electrodes with cross patterns may be connected vertically. The second electrode 440 may be surrounded by a first electrode 430 along an outline of the second electrode 440.

The second electrode 240 of FIG. 2 having a shape of a single cross, or the second electrode 440 of FIG. 5 may be formed, compared to the second electrode 140 of FIG. 1 having a shape of a straight bar, and accordingly a signal sensitivity caused by a touch input may be increased. Hereinafter, this will be described with reference to FIGS. 6 through 8.

FIGS. 6 and 7 are diagrams provided to explain an operation principle of a touch-sensing apparatus according to an embodiment of the present invention. FIGS. 6 and 7 respectively illustrate a typical touch-sensing apparatus with a two-layer structure, and a method of detecting a change in capacitance in the touch-sensing apparatus according to the present invention.

Referring to FIG. 6, in the touch-sensing apparatus with the two-layer structure, a first electrode 530a to which a driving signal 535a is applied, and a second electrode 540a used to sense a sensing signal in a controller may be formed in different sides. The first electrode 530a and the second electrode 540a may be disposed in different layers, a substrate 510a may be sandwiched between the first electrode 530a and the second electrode 540a, and an input by a touch object 560a may occur in a cover lens 550a having an exposed side.

A change in capacitance may occur between the first electrode 530a to which the driving signal 535a is applied, and the neighboring second electrode 540a. In this instance, the change in the capacitance may occur through the substrate 510a disposed between the first electrode 530a and the second electrode 540a, and may occur in a direction of a shortest distance between the first electrode 530a and the second electrode 540a and in the cover lens 550a disposed between the second electrode 540a and the touch object 560a. Additionally, a capacitance generated through the cover lens 550a may be greatly influenced by the touch object 560a, compared to a capacitance generated in a shortest distance through the substrate 510a. Accordingly, to increase a sensitivity of recognition of the touch object 560a, a capacitance generated in a direction of the cover lens 550a may desirably be increased.

Since the first electrode 530a and the second electrode 540a face each other in the two-layer structure, as shown in FIG. 6, a relatively large change in capacitance may occur in a direction of a shortest distance through the substrate 510a, and accordingly a capacitance generated in the cover lens 550a may have a small magnitude. For example, when a change in capacitance caused by an input of the touch object 560a is not sufficient, an accuracy of determination of a touch input may be reduced.

Conversely, referring to FIG. 7 that illustrates a single-layer structure in which both a first electrode 530b and a second electrode 540b are disposed in the same side, most of capacitances occurring between the first electrode 530b to which a driving signal 535b is applied and the neighboring second electrode 540b may be generated through a cover lens 550b. Accordingly, an accuracy of determination of a touch input may be increased, since an intensity of a sensing signal is greater than that of FIG. 6 despite a small size of a touch area generated by a touch object 560b.

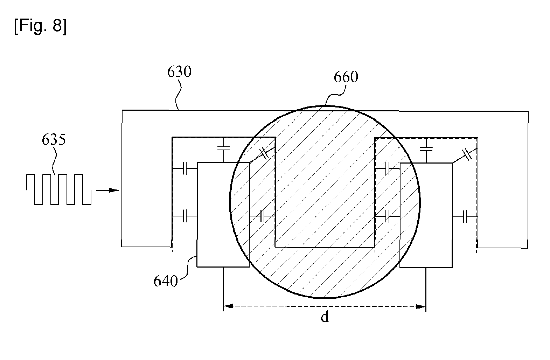

In particular, in the present embodiment, the second electrode 540b may be disposed to fill a space in the first electrode 530b, or may be surrounded by the first electrode 530b, and accordingly the accuracy of determination of a touch input may be further increased, compared to when the first electrode 530b and the second electrode 540b are disposed in parallel. Hereinafter, this will be described with reference to FIG. 8.

FIG. 8 is a diagram provided to explain an operation method of a touch-sensing apparatus according to the present invention. Referring to FIG. 8, a predetermined driving signal 635 may be applied to a first electrode 630, and a second electrode 640 may be disposed to fill a space prepared in the first electrode 630. In the present embodiment, the driving signal 635 may be represented in the form of a square wave, but a shape of the driving signal 635 is not necessarily limited to the square wave. The driving signal 635 with various shapes, such as a sine wave, a triangle wave and the like, may be applied. The driving signal 635 may have a specific frequency, and a frequency of the driving signal 635 may be changed based on a type of applications executed in electronic equipment in which a touch-sensing panel is mounted to reduce a noise component.

When a predetermined touch region 660 is formed by a touch object in a location adjacent to the first electrode 630 to which the driving signal 635 is applied, a change in capacitance may occur between the first electrode 630 and the second electrode 640. As described above in FIGS. 6 and 7, unlike the two-layer structure, a change in mutual capacitance in a single-layer structure of the present embodiment may occur in substantially parallel with a plane in which the first electrode 630 and the second electrode 640 are disposed. In other words, the change in mutual capacitance may occur in a direction that is in substantially parallel with the substrate 530b by penetrating the cover lens 540b, as shown in FIG. 7, instead of being formed through the substrate 510a between the first electrode 530a and the second electrode 540a, as shown in FIG. 6.

Accordingly, a change in mutual capacitance occurring by the touch region 660 between the first electrode 630 and the second electrode 640 may be greater than that of the two-layer structure. This means a large intensity of a sensing signal that may sensed by a controller chip with respect to the same touch input. As a result, an accuracy of determination of a touch input may be increased.

In this instance, since the second electrode 640 is disposed in a space prepared in the first electrode 630 (or since the second electrode 640 is surrounded by the first electrode 630 along an outline of the second electrode 640), a change in mutual capacitance may occur in all outlines of the second electrode 640 corresponding to the first electrode 630. Accordingly, a great change in mutual capacitance influenced by the touch region 660 may occur, compared to when the first electrode 630 and the second electrode 640 are disposed adjacent to each other.

In addition, second electrodes 640 may be formed so that a gap d between the second electrodes 640 may correspond to a typical diameter of the touch region 660 that is numerically, empirically modeled in a circular shape, and accordingly an intensity of a sensing signal acquired by the controller chip may be further increased. In other words, when the gap d is set to be less than the typical diameter of the touch region 660, the touch region 660 may be highly likely to overlap at least two second electrodes 640, and accordingly an accuracy of determination of a touch input may be relatively increased.

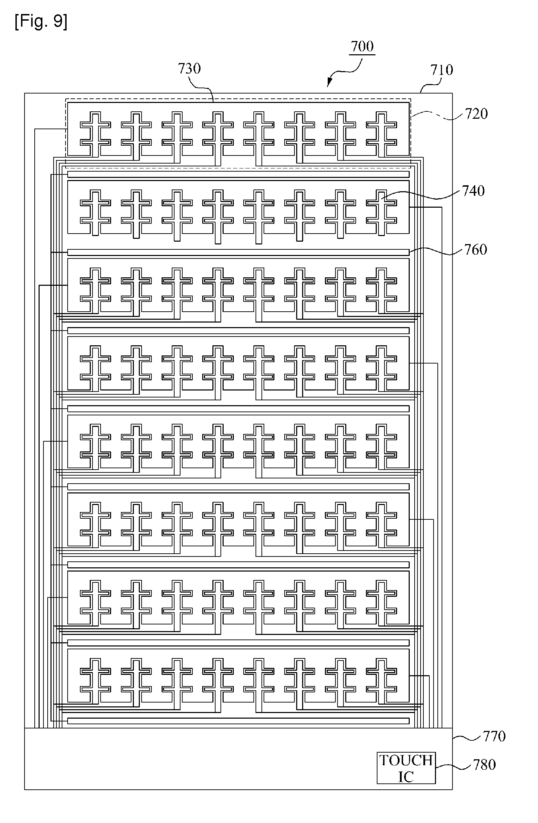

FIG. 9 is a diagram illustrating a touch-sensing apparatus according to an embodiment of the present invention. Referring to FIG. 9, a touch-sensing apparatus 700 according to the present embodiment may include a substrate 710, sensing regions 720 that are formed on the substrate 710 and that include a plurality of first electrodes 730 and second electrodes 740, a third electrode 760 disposed between each of the sensing regions 720, and the like. A controller chip 780 used to determine a touch input may be mounted in a circuit board 770, and may be attached to one end of the substrate 710.

In the present embodiment, the second electrode 740 may have a shape of two crosses connected vertically. In other words, the second electrode 740 may have a straight line pattern that extends in a second axis direction intersecting a first axis in a space prepared in the first electrode 730 extending in the first axis, and may further include a branch-shaped sub-electrode that intersects the straight line pattern. As described above in FIG. 8, when the branch-shaped sub-electrode is included in the second electrode 740, a change in mutual capacitance between the second electrode 740 and the first electrode 730 by a touch object may be increased.

Referring to FIG. 9, the third electrode 760 may be disposed between each of the sensing regions 720, to be in parallel with the sensing regions 720. All of the third electrodes 760 may be connected to a single sensing channel, and may be maintained at a constant voltage, desirably at a voltage of a ground level.

To determine one or more touch inputs in the touch-sensing apparatus 700, the controller chip 780 may sequentially apply a predetermined driving signal to each of the plurality of first electrodes 730, respectively, and may detect a change in mutual capacitance in the second electrode 740. In this instance, to accurately determine a touch input, a change in mutual capacitance occurring between first electrodes 730 other than a first electrode 730 to which a driving signal is applied and a second electrode 740 that desires to acquire a sensing signal from the controller chip 780 may desirably be minimized.

For example, it is assumed that a driving signal is applied to a first electrode 730 shown in a top line of FIG. 9, and that a sensing signal is acquired from a second electrode 740 surrounded by the first electrode 730 to which the driving signal is applied. In this instance, a change in capacitance may occur between first electrodes 730 other than the first electrode 730 to which the driving signal is applied, in particular a first electrode 730 shown in a second line from top, and a plurality of second electrodes 740 shown in the top line. The change in capacitance may function as a noise component in determination of a touch input.

To reduce an influence by the noise component, the third electrode 760 used to maintain a constant voltage, desirably a voltage of a ground level, may be disposed between each of the sensing regions 720. The third electrode 760 may reduce a change in capacitance occurring between a second electrode 740 surrounded by a first electrode 730 to which a driving signal is applied, and a first electrode 730 to which a driving signal is not applied.

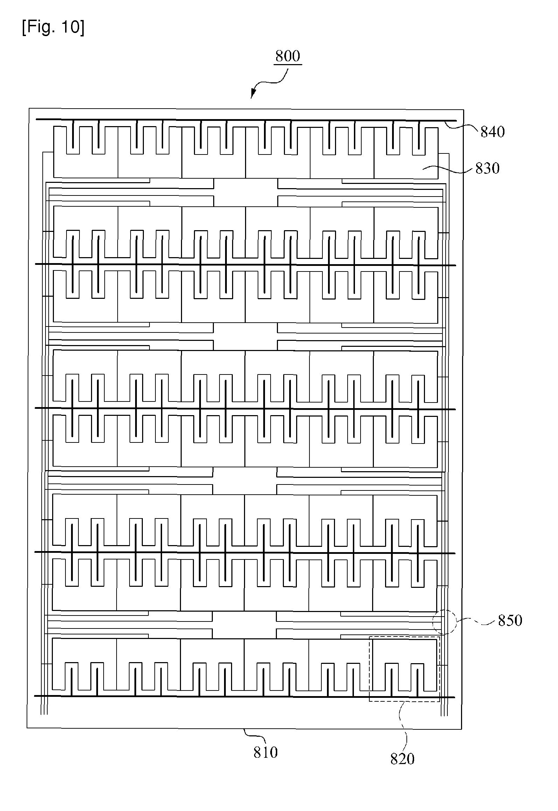

FIG. 10 is a diagram illustrating a touch-sensing panel according to an embodiment of the present invention. Referring to FIG. 10, a plurality of sensing regions 820 may be two-dimensionally arranged on a substrate 810, and each of the sensing regions 820 may include a first electrode 830 and a second electrode 840. For convenience of description in the present embodiment, a single first electrode 830 and a single second electrode 840 are assumed to be included in each of the sensing regions 820, however, this may be changed based on how to define the sensing regions 820.

Since the plurality of sensing regions 820 are two-dimensionally arranged on the substrate 810, the sensing regions 820 may be adjacent to each other in a first axis (horizontal direction) or a second axis (vertical direction). In particular, second electrodes 840 may be electrically connected to each other in the plurality of sensing regions 820 adjacent to each other in the first axis direction corresponding to the horizontal direction. For example, as shown in FIG. 10, a rectangular-shaped second electrode 840 may be disposed to traverse the plurality of sensing regions 820.

A first electrode 830 included in a specific sensing region 820 may be electrically connected to a first electrode 830 included in another sensing region 820, through a separate wiring 850, unlike the second electrode 840. Referring to FIG. 10, first electrodes 830 included in a sensing region 820 disposed in the same location on the second axis may be electrically connected to each other through the wiring 850. Accordingly, similarly to the touch-sensing panels of FIGS. 1, 4, and the like, a part of the wiring 850 may need to be disposed within an effective sensing region of a touch-sensing panel 800.

When a predetermined driving signal is applied to first electrodes 830 sequentially, and when a touch input sensing algorithm for acquiring a sensing signal from a second electrode 840 adjacent to a first electrode 830 to which a driving signal is applied is assumed to be used, a driving signal may be transferred to a first electrode 830 included in a sensing region 820 disposed inside the substrate 810, rather than being disposed in an edge of the substrate 810, through a wiring 850 disposed within the effective sensing region. Accordingly, an unintended change in coupling capacitance may occur, as a sensing signal, between the wiring 850 and a neighboring second electrode 840, which may function as a noise signal in determination of a touch input.

Accordingly, in the present embodiment, a controller chip (not shown) may be connected to a second electrode 840 used to acquire a sensing signal and a first electrode 830, and the first electrode 830 and the second electrode 840 may be disposed so that wirings 850 disposed in the effective sensing region may not be adjacent to each other. In other words, as shown in FIG. 10, the wiring 850 disposed in the effective sensing region may be adjacent to only the first electrode 830, and may be separated from the second electrode 840 so that the first electrode 830 may be sandwiched between the wirings 850 and the second electrode 840. For example, when a driving signal is applied to a first electrode 830 located in a third column from the left, first electrodes 830 located in a first column and a second column from the left may be maintained at a constant voltage of a ground level, and accordingly a change in coupling capacitance occurring between the second electrode 840 and a driving signal transferred to a wiring 850 connected to the first electrode 830 located in the third column, may be minimized.

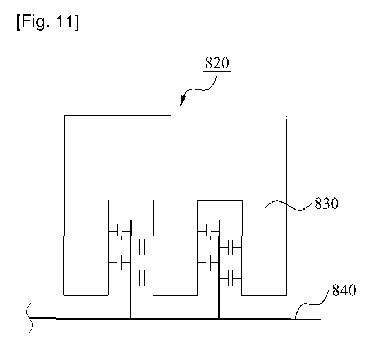

A change in coupling capacitance may occur between the first electrode 830 and the second electrode 840, and may be proportional to an area of a touch region formed by a touch input. When a touch region with the same area is formed, the second electrode 840 may include a predetermined third electrode, to maximize a change in coupling capacitance and to increase a sensitivity. This will be described with reference to FIG. 11.

Referring to FIG. 11, a single sensing region 820 may include a first electrode 830 and a second electrode 840, and a branch-shaped third electrode may be prepared in a direction intersecting a length of the second electrode 840. The first electrode 830 may include a same number of concave portions as a number of third electrodes, so that the first electrode 830 may correspond to the third electrodes as wide an area as possible. In the present embodiment, two third electrodes are assumed to correspond to a single first electrode 830, however, it is possible to increase an intensity of a sensing signal by increasing the number of third electrodes, as described above in FIGS. 8 and 9.

Although a few embodiments of the present invention have been shown and described, the present invention is not limited to the described embodiments. Instead, it would be appreciated by those skilled in the art that changes may be made to these embodiments without departing from the principles and spirit of the invention, the scope of which is defined by the claims and their equivalents.

## Claims

1. A touch-sensing panel, comprising:
a substrate; and
one or more sensing regions prepared on the substrate,
wherein each of the one or more sensing regions includes one or more first electrodes extending in a first axis direction, and one or more second electrodes extending in a second axis direction intersecting a first axis, and
wherein at least one of the second electrodes are electrically connected to another second electrode arrayed at the same position on the first axis and included in different sensing region.

2. The touch-sensing panel of claim 1, wherein a first electrode and a second electrode included in each of the one or more sensing regions are disposed on the same surface of the substrate.

3. The touch-sensing panel of claim 1, wherein each of the second electrodes is disposed to fill one or more spaces prepared in a neighboring first electrode.

4. The touch-sensing panel of claim 3, wherein the one or more spaces prepared in the first electrode is located inside the first electrode, along a second axis.

5. The touch-sensing panel of claim 3, wherein the one or more spaces prepared in the first electrode comprises at least one cross pattern corresponding to the first axis direction and the second axis direction.

6. The touch-sensing panel of claim 1, further comprising:
a plurality of wiring patterns connected to each of the first electrodes and the second electrodes, respectively.

7. The touch-sensing panel of claim 6, wherein the wiring patterns comprise:
a first wiring pattern disposed in a bezel region of the substrate that corresponds to an outline of the sensing region; and
a second wiring pattern connecting the first wiring pattern to the one or more second electrodes, by traversing the sensing region.

8. The touch-sensing panel of claim 7, wherein the first wiring pattern is formed on a predetermined circuit board, and is attached onto the substrate,
wherein the first wiring pattern is connected to the second wiring pattern through a via hole prepared in the predetermined circuit board.

9. The touch-sensing panel of claim 7, wherein the second wiring pattern is electrically isolated from a part of the first wiring pattern by a predetermined insulating layer in the bezel region.

10. The touch-sensing panel of claim 1, comprising:
a third electrode disposed between each of the one or more sensing regions,
wherein the third electrode extends in the same direction as a length of the sensing region.

11. The touch-sensing panel of claim 10, wherein the third electrode is connected to a constant voltage.

12. A touch-sensing apparatus for determining one or more touch inputs, the touch-sensing apparatus comprising:
a plurality of first electrodes to which a driving signal is applied;
a plurality of second electrodes formed on the same layer as the first electrodes; and
a controller chip to determine the one or more touch inputs,
wherein each of the plurality of second electrodes is surrounded by a neighboring first electrode, and
wherein the controller chip determines the one or more touch inputs, based on a change in a mutual capacitance generated between the second electrode and the first electrode to which the driving signal is applied.

13. The touch-sensing apparatus of claim 12, wherein the controller chip sequentially applies a driving signal to each of the plurality of first electrodes, and applies a constant voltage to first electrodes other than a first electrode to which the driving signal is applied.

14. The touch-sensing apparatus of claim 12, further comprising:
a third electrode disposed between the plurality of first electrodes,
wherein the third electrode is connected to a constant voltage.

15. The touch-sensing apparatus of claim 14, wherein the third electrode extends in the same direction as the first electrode.

16. The touch-sensing apparatus of claim 14, wherein the third electrode is connected to a constant voltage of a ground level.

17. The touch-sensing apparatus of claim 12, wherein the second electrodes surrounded by the same first electrode are disposed in the same location on a first axis.

18. The touch-sensing apparatus of claim 12, wherein the second electrodes surrounded by the same first electrode are disposed at regular intervals, along a second axis.

19. The touch-sensing apparatus of claim 17, wherein the second electrode disposed in the same location on the second axis is electrically connected to a single sensing channel of the controller chip.

20. A touch-sensing panel comprising a plurality of unit sensing regions two-dimensionally arranged in an effective sensing region of a substrate,
wherein the unit sensing region comprises one or more first electrodes and one or more second electrodes,
wherein at least a part of the one or more first electrodes are electrically connected to another first electrode prepared arrayed at the same location on a first axis, through a wiring prepared in the effective sensing region, and
wherein the wiring prepared in the effective sensing region is disposed adjacent to only the first electrode.

21. The touch-sensing panel of claim 20, wherein the wiring prepared in the effective sensing region is disposed adjacent to the first electrode in a second axis direction that intersects the first axis.

22. The touch-sensing panel of claim 21, wherein at least one of the one or more second electrodes are connected to a second electrode arrayed at the same position on a second axis and included in another unit sensing region while traversing the effective sensing region

23. The touch-sensing panel of claim 20, wherein a part of the one or more second electrodes are disposed adjacent to the one or more first electrodes in both sides of the second axis direction.

24. The touch-sensing panel of claim 20, wherein a part of the one or more second electrodes are disposed adjacent to the one or more first electrodes in one side of the second axis direction.

25. The touch-sensing panel of claim 20, further comprising:
a plurality of third electrodes intersecting the second electrode.

26. The touch-sensing panel of claim 20, further comprising:
a circuit unit to apply a predetermined electrical signal to the first electrode, and to acquire a sensing signal from a second electrode adjacent to the first electrode to which the predetermined electrical signal is applied.

27. The touch-sensing panel of claim 26, wherein the circuit unit acquires, as the sensing signal, a change in a capacitance occurring between the second electrode and the first electrode to which the predetermined electrical signal is applied, by one or more touch objects.

28. The touch-sensing panel of claim 26, wherein the change in the capacitance comprises a change in a mutual capacitance occurring between the second electrode and the first electrode to which the predetermined electrical signal is applied.

29. A controller chip for determining a touch input applied to the touch-sensing panel of one of claims 1 to 11 and 20 to 25.
